# EUROPEAN PATENT SPECIFICATION

(11) **EP 2 765 060 B1**
(45) Date of publication and mention of the grant of the patent: **11.04.2018**
(21) Application number: 14154127.6
(22) Date of filing: 06.02.2014
(51) Int. Cl.: B62D 5/04, B62D 7/08

(54) **Vehicle electric power steering contorl system**
Elektrisches Fahrzeug-Servolenkungssystem
Système de commande de direction assistée électrique de véhicule

(30) Priority: 06.02.2013 US 201361761480 P; 06.02.2013 US 201361761477 P
(43) Date of publication of application: 13.08.2014
(73) Proprietor: Steering Solutions IP Holding Corporation, Saginaw, MI 48601 (US)
(72) Inventor: Fisher, Paul M., Saginaw, MI Michigan 48603 (US); Greathouse, Darryl L., Essexville, MI Michigan 48732 (US); Keister, Timothy S., Linwood, MI Michigan 48634 (US); Pattok, Eric D., Frankenmuth, MI Michigan 48734 (US); Ross, Christian E., Freeland, MI Michigan 48623 (US); Ryne, Patrik, Midland, MI Michigan 48642 (US); Sebastian, Tomy, Saginaw, MI Michigan 48603 (US)
(74) Representative: Manitz Finsterwald Patentanwälte PartmbB

(56) References cited:
- EP-A1- 2 450 259
- WO-A1-2012/052817
- DE-A1-102005 044 875
- US-A1- 2004 113 575
- US-A1- 2011 156 627

## Description

### CROSS-REFERENCE TO RELATED APPLICATION

### BACKGROUND OF THE INVENTION

Larger vehicles require significant force to turn the wheels during a steering action. It is difficult to provide the power required to produce this force using current controller technology. In the event of a controller shutdown, the loss of power steering assist would require more effort from the driver to steer the vehicle. The inadequate power steering assist is undesirable and may lead to poor consumer satisfaction and a perceived lack of quality. The features of the preamble of the independent claims are known from WO 2012/052817 A1. Related technologies are known from DE 10 2005 044875 A1 and EP 2 450 259 A1.

### SUMMARY OF THE INVENTION

The invention is defined in the independent claims. A vehicle electric power steering (EPS) control system includes a motor operatively coupled to an EPS linkage arrangement, the motor comprising a first winding and a second winding. Also included is a power source for the motor and EPS control system. Further included is a controller in operative communication with the motor and the power source. The controller includes a microprocessor configured to receive input from a torque sensor and a motor sensor. The EPS controller also includes a first field-effect transistor (FET) driver in operative communication with the microprocessor and a first plurality of FETs operatively connected to the first winding of the motor. The EPS controller a second FET driver in operative communication with the microprocessor and a second plurality of FETs operatively connected to the second winding of the motor.

A vehicle electric power steering (EPS) control system includes a motor operatively coupled to an EPS linkage arrangement, the motor comprising a first winding and a second winding. Also included is a power source configured to power the first winding and the second winding of the motor. Further included is a first electronic control unit (ECU) in operative communication with the power source and the first winding of the motor. The first ECU includes a first microprocessor configured to receive input from a first torque sensor and a first motor sensor. The first ECU also includes a first field-effect transistor (FET) driver in operative communication with the first microprocessor and a first plurality of FETs operatively connected to the first winding of the motor. The EPS control system yet further includes a second ECU in operative communication with the power source and the second winding of the motor. The second ECU includes a second microprocessor configured to receive input from a second torque sensor and a second motor sensor. The second ECU also includes a second field-effect transistor (FET) driver in operative communication with the second microprocessor and a second plurality of FETs operatively connected to the second winding of the motor.

These and other advantages and features will become more apparent from the following description taken in conjunction with the drawings.

### BRIEF DESCRIPTION OF THE DRAWINGS

The subject matter which is regarded as the invention is particularly pointed out and distinctly claimed in the claims at the conclusion of the specification. The foregoing and other features, and advantages of the invention are apparent from the following detailed description taken in conjunction with the accompanying drawings in which:
FIG. 1 schematically illustrates an electric power steering linkage arrangement;
FIG. 2 is a schematic diagram illustrating an electric power steering control system in accordance with an exemplary embodiment of the invention;
FIG. 3 is a schematic diagram illustrating the electric power steering control system in accordance with another exemplary embodiment of the invention; and
FIG. 4 is a schematic illustration of a motor of the electric power steering control system.

### DETAILED DESCRIPTION

Referring now to the Figures, where the invention will be described with reference to specific embodiments, without limiting same, the disclosed invention provides steering assist in a steering system required to provide high assist torque even when a system fault occurs.

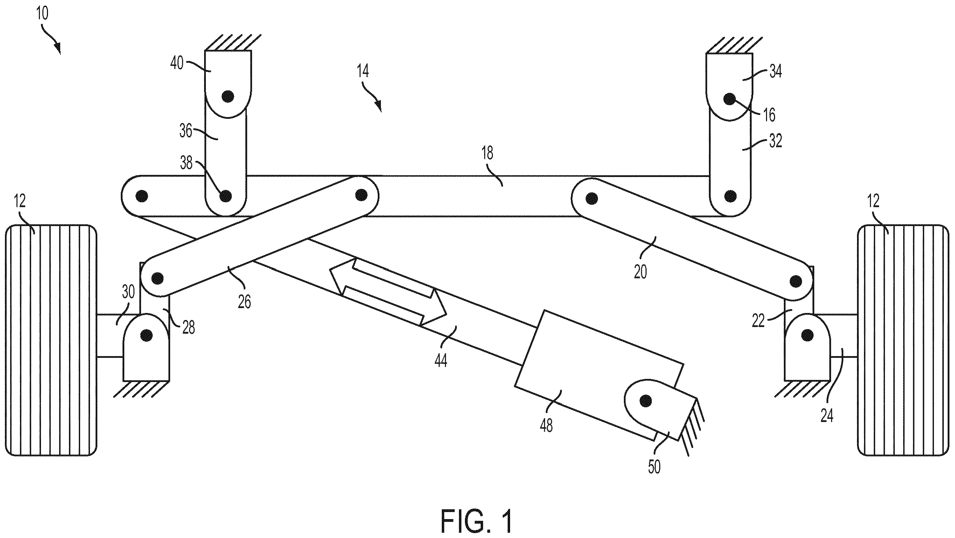

Referring to FIG. 1, a portion of a steering system 10 for a vehicle is schematically illustrated. The architecture of the steering system 10 is referred to as a "parallelogram" steering system. It is contemplated that the steering system 10 may be employed in numerous types of vehicles. In one embodiment, the steering system 10 is used in association with high assist applications, such as heavy or light duty trucks that have high static and dynamic steering load requirements, the requirements of which are known to a person of skill in the art.

The steering system 10 includes numerous components, such as various linkage members, sensors, switches, and accessories. The steering system 10 transfers rotation and torque from an input member, such as a steering wheel assembly (not illustrated) to an output member, such as one or more wheels 12. The steering wheel assembly is operatively coupled to a linkage arrangement 14 of the steering system 10 with a first shaft 16, which may be referred to as a pitman shaft. The wheels 12 of the vehicle are turned through movement of the linkage arrangement 14 and, more particularly, though movement of a cross-link member 18. The cross-link member 18 extends in a substantially transverse direction relative to vehicle travel, i.e. cross-car direction of the vehicle, and translates in this direction as well. Translation of the cross-link member 18 imparts movement of numerous other components that link the cross-link member 18 to the wheels 12 of the vehicle. Such intermediary components include a first tie rod 20 rotationally coupled to the cross-link member 18, as well as one or more additional linkage members 22 and a first steering knuckle 24 that pivots with respect to a frame of the vehicle. Similarly, a second tie rod 26 is rotationally coupled to the cross-link member 18 and is indirectly coupled to a wheel of the vehicle with a linkage member 28 and a second steering knuckle 30 that pivots with respect to the frame of the vehicle.

In the illustrated embodiment, the linkage arrangement 14 includes a first linkage arm 32 that is pivotally coupled to the cross-link member 18 at a location proximate the first shaft 16. The first linkage arm 32 is pivotally coupled to the frame of the vehicle via a first pivot joint 34 and is free to rotate in response to an input from the first shaft 16. A second linkage arm 36 is also pivotally coupled to the cross-link member 18 at a pivot location 38. The second linkage arm 36 is pivotally coupled to the frame of the vehicle via a second pivot joint 40 and is free to rotate.

A linkage member 44 extends from an electric motor 48 that is operatively coupled to the frame of the vehicle. The operative coupling of the electric motor 48 comprises a pivotal connection via a pivot joint 50. In the illustrated embodiment, the electric motor 48 is configured to translate the linkage member 44 in a substantially linear manner in the direction of the arrow shown in FIG. 1. The linkage member 44 is directly coupled to the cross-link member 18 proximate an end 52 of the linkage member 44. It is to be understood that coupling of the linkage member 44 to the cross-link member 18 may be present along any portion of the cross-link member 18. The illustrated coupling location is merely illustrative and is not intended to be limiting.

It is to be appreciated that the above-described linkage arrangement is merely exemplary and various alternative linkage arrangements may be employed in association with the control system described in detail herein.

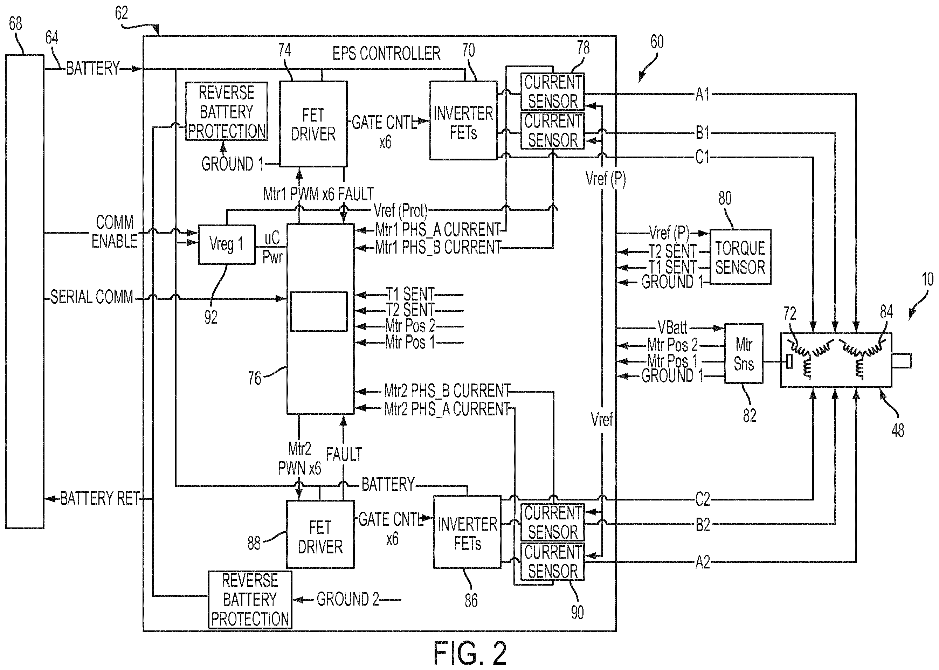

Referring now to FIG. 2, an exemplary embodiment of a control system 60 for the steering system 10 and, more specifically, the linkage arrangement 14 of the steering system 10. The control system 60 includes a controller 62 for controlling the electrical power supplied to the electric motor 48. The controller 62 includes a power input 64 for receiving electrical power. Typically, the electrical power is supplied by one or more batteries 68 and has a voltage. Current vehicle applications utilize 12 V systems. However, those skilled in the art should readily appreciate that other sources of the electrical power in the vehicle may be implemented and that other voltages may alternatively be suitable.

The controller 62 includes at least one, but typically a first plurality of power devices 70 electrically connected to the power input 64 and also connected to a first winding 72 of the electric motor 48. In operation, the first power devices 70 receive electrical power and variably provide the electrical power to the electric motor 48. In one embodiment, the first power devices 70 are inverter field-effect transistors (FETs), such as MOSFETs or some other suitable alternative power device. A first driver 74 is electrically connected to the first power devices 70 for regulating the operation of, and electric power provided to, the first power devices 70. By regulating the electric power provided to the first power devices 70, the first driver 74 regulates the electric power provided to the electric motor 48. The electric power is often provided in a variable manner that changes the amount of power steering assist provided by the electric motor 48, depending on certain vehicle conditions, as described herein.

The controller 62 also includes a microprocessor 76 electrically connected to the first driver 74 for controlling the first driver 74. Control of the first driver 74 is based on at least one signal input to the microprocessor 76 for regulating the amount of power supplied by the first power devices 70 to the electric motor 48. In one embodiment, the microprocessor 76 is a dual-core processor, but it is to be understood that suitable alternative processing devices may be employed. As noted above, the microprocessor 76 includes one or more signal inputs for power regulation purposes. These inputs include, but are not limited to, the electric current flowing through the first power devices 70, the speed of the electric motor 48, the positioning of a rotor of the electric motor 48, and the speed of the vehicle.

To provide a signal corresponding to the current flowing through the first power devices 70, the controller 62 includes at least one first current sensor 78 electrically connected to the first power devices 70. In the illustrated embodiment, two first current sensors are included to detect the current flowing through the first power devices 70. The first current sensor(s) 78 are in operative communication with the microprocessor 76. More specifically, the first current sensor(s) 78 are electrically connected to the microprocessor 76.

To provide a signal related to the torque applied at the steering column of the steering system 10, a torque sensor 80 is included. In the exemplary embodiment of the linkage arrangement 14 of FIG. 1, the torque sensor 80 is located proximate the first linkage arm 32 and, more specifically, proximate the first pivot joint 34 of the first linkage arm 32. A signal related to the position of the electric motor 48 is provided by a motor sensor 82 in operative communication with the electric motor 48. As will be appreciated from the description below, the electric motor 48 is a dual wound motor that includes the first winding 72 noted above and a second winding 84.

To provide redundancy for the steering system 10, the controller 62 includes a duplicative sub-system that may be referred to as a redundant, or secondary, sub-system. The components described in detail above may be referred to as a primary sub-system. It is to be appreciated that the primary sub-system and the redundant sub-system include overlapping components and are differentiated by duplicative components that include, but are not limited to, the second winding 84 of the electric motor 48, one or more second power devices 86, a second driver 88 and one or more second current sensors 90. In this system, both sub-systems would operate simultaneously, with each providing a portion of the overall power to the system. If one sub-system can no longer operate correctly, the other sub-system can continue to operate, providing a reduced level of total performance.

The second power devices 86 are electrically connected to the power input 64 and to a second winding 84 of the electric motor 48. In operation, the second power devices 86 receive electrical power and variably provide the electrical power to the electric motor 48. In one embodiment, the second power devices 86 are inverter field-effect transistors (FETs), such as MOSFETs or some other suitable alternative power device. The second driver 88 is electrically connected to the second power devices 86 for regulating the operation of, and electric power provided to, the second power devices 86. By regulating the electric power provided to the second power devices 86, the second driver 88 regulates the electric power provided to the electric motor 48. The electric power is often provided in a variable manner that changes the amount of power steering assist provided by the electric motor 48, depending on certain vehicle conditions, as described herein.

The microprocessor 76 is electrically connected to the second driver 88 for controlling the second driver 88. Control of the second driver 88 is based on at least one signal input to the microprocessor 76 for regulating the amount of power supplied by the second power devices 86 to the electric motor 48. As described above, the microprocessor 76 includes one or more signal inputs for power regulation purposes. These inputs include, but are not limited to, the electric current flowing through the second power devices 86, the speed of the electric motor 48, the positioning of a rotor of the electric motor 48, and the speed of the vehicle.

To provide a signal corresponding to the current flowing through the second power devices 86, the controller 62 includes the second current sensor(s) 90 that is electrically connected to the second power devices 86. In the illustrated embodiment, two second current sensors are included to detect the current flowing through the second power devices 86. The second current sensor(s) 90 are in operative communication with the microprocessor 76. More specifically, the second current sensor(s) 90 are electrically connected to the microprocessor 76.

As described above, a signal related to the position of the electric motor 48 is provided by a motor sensor 82 in operative communication with the electric motor 48. The motor sensor 82 is configured to detect and communicate to the microprocessor 76 the position of the first winding 72 and the second winding 84.

The controller 62 also includes a voltage regulator 92 that is in operative communication with the battery 68 and is configured to regulate and selectively route electric power to the primary sub-system and the redundant sub-system. The voltage regulator 92 is electrically connected to various components of the primary sub-system and the redundant sub-system.

In the above-described embodiment, the electric motor 48 comprises a dual winding motor and the overall control system includes dual motor control power devices (e.g., first and second power devices 70, 86). The electric motor 48 effectively comprises two three-phase motors available for powering electric assist to the linkage arrangement 14 of the steering system 10. Dual control with the addition of the redundant sub-system facilitates power steering assist in the event of failure of the first power devices 70 (i.e., first inverter set) and allows for more effective management of the thermal system losses by spreading the heat between two inverter groups.

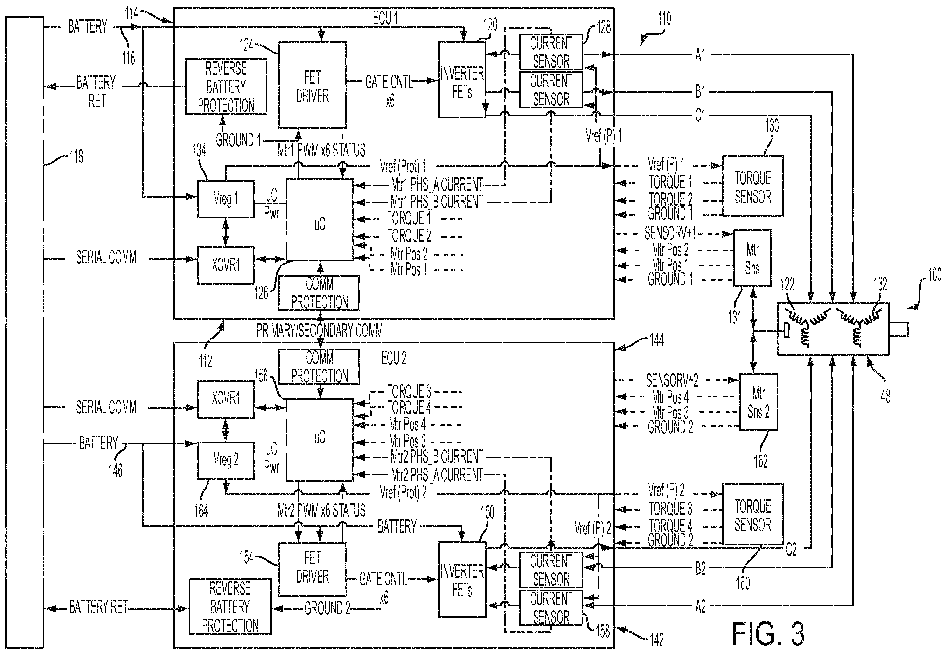

Referring now to FIG. 3, a steering system 100 is illustrated in accordance with another exemplary embodiment of the invention. The illustrated embodiment is similar in some respects to the embodiments described above in relation to FIG. 2 and includes similar components, such that description of identical components is not provided in a duplicative manner, where appropriate. In particular, the linkage arrangement 14 of the steering system 10 and components thereof are referred to with similar reference numerals. As will be described in detail below, the embodiment shown in FIG. 3 includes a control system that comprises a complete duplication of sub-systems that facilitates complete redundancy of the entire electronic system.

In the illustrated embodiment, the steering system 100 includes a control system 110 for the steering system 100 and, more specifically, the linkage arrangement 14 of the steering system 100. The control system 110 includes a primary sub-system 112 that includes a first electronic control unit (ECU) 114 for controlling the electrical power supplied to the electric motor 48. The first ECU 114 includes a first power input 116 for receiving electrical power. Typically, the electrical power is supplied from one or more batteries 118 and has a voltage. As noted above, current vehicle applications utilize 12 V systems. However, those skilled in the art should readily appreciate that other sources of the electrical power in the vehicle may be implemented and that other voltages may alternatively be suitable.

The first ECU 114 includes at least one, but typically a first plurality of power devices 120 electrically connected to the first power input 116 and to a first winding 122 of the electric motor 48. In operation, the first power devices 120 receive electrical power and variably provide the electrical power to the electric motor 48. In one embodiment, the first power devices 120 are inverter field-effect transistors (FETs), such as MOSFETs or some other suitable alternative power device. A first driver 124 is electrically connected to the first power devices 120 for regulating the operation of, and electric power provided to, the first power devices 120. By regulating the electric power provided to the first power devices 120, the first driver 124 regulates the electric power provided to the electric motor 48. The electric power is often provided in a variable manner that changes the amount of power steering assist provided by the electric motor 48, depending on certain vehicle conditions, as described herein.

The first ECU 114 also includes a first microprocessor 126 electrically connected to the first driver 124 for controlling the first driver 124. Control of the first driver 124 is based on at least one signal input to the first microprocessor 126 for regulating the amount of power supplied by the first power devices 120 to the electric motor 48. In one embodiment, the first microprocessor 126 is a dual-core processor, but it is to be understood that suitable alternative processing devices may be employed. As noted above, the first microprocessor 126 includes one or more signal inputs for power regulation purposes. These inputs include, but are not limited to, the electric current flowing through the first power devices 120, the speed of the electric motor 48, the positioning of a rotor of the electric motor 48, and the speed of the vehicle.

To provide a signal corresponding to the current flowing through the first power devices 120, the first ECU 114 includes at least one first current sensor 128 electrically connected to the first power devices 120. In the illustrated embodiment, two first current sensors are included to detect the current flowing through the first power devices 120. The first current sensor(s) 128 are in operative communication with the first microprocessor 126. More specifically, the first current sensor(s) 128 are electrically connected to the first microprocessor 126.

To provide a signal related to the torque applied at the steering column of the steering system 100, a first torque sensor 130 is included. In the exemplary embodiment of the linkage arrangement 14 of FIG. 1, the first torque sensor 130 is located proximate the first linkage arm 32 and, more specifically, proximate the first pivot joint 34 of the first linkage arm 32. A signal related to the position of the electric motor 48 is provided by a first motor sensor 131 in operative communication with the electric motor 48. The electric motor 48 is a dual wound motor that includes the first winding 122 noted above and a second winding 132. The first motor sensor 131 is configured to detect the position of the rotor in the electric motor 48 which is common to both windings 122, 132.

The first ECU 114 also includes a first voltage regulator 134 that is in operative communication with the battery 118 and is configured to regulate and selectively route electric power to the primary sub-system, specifically including the first driver 124, the first microprocessor 126 and the first current sensor(s) 128, among other potential components.

As noted above, complete redundancy of the control system 110 is achieved with a duplication of the components of the primary sub-system. Specifically, the control system 110 includes a redundant sub-system 142 that includes a second electronic control unit (ECU) 144 for controlling the electrical power supplied to the electric motor 48. The second ECU 144 includes a second power input 146 for receiving electrical power. Typically, the electrical power is supplied by the battery 118 and has a voltage. Once again, current vehicle applications utilize 12 V systems. However, those skilled in the art should readily appreciate that other sources of the electrical power in the vehicle may be implemented and that other voltages may alternatively be suitable.

The second ECU 144 includes at least one, but typically a second plurality of power devices 150 electrically connected to the second power input 146 and to the second winding 132 of the electric motor 48. In operation, the second power devices 150 receive electrical power and variably provide the electrical power to the electric motor 48. In one embodiment, the second power devices 150 are inverter field-effect transistors (FETs), such as MOSFETs or some other suitable alternative power device. A second driver 154 is electrically connected to the second power devices 150 for regulating the operation of, and electric power provided to, the second power devices 150. By regulating the electric power provided to the second power devices 150, the second driver 154 regulates the electric power provided to the electric motor 48. The electric power is often provided in a variable manner that changes the amount of power steering assist provided by the electric motor 48, depending on certain vehicle conditions, as described herein.

The second ECU 144 also includes a second microprocessor 156 electrically connected to the second driver 154 for controlling the second driver 154. Control of the second driver 154 is based on at least one signal input to the second microprocessor 156 for regulating the amount of power supplied by the second power devices 150 to the electric motor 48. In one embodiment, the second microprocessor 156 is a dual-core processor, but it is to be understood that suitable alternative processing devices may be employed. As noted above, the second microprocessor 158 includes one or more signal inputs for power regulation purposes. These inputs include, but are not limited to, the electric current flowing through the second power devices 150, the speed of the electric motor 48, the positioning of a rotor of the electric motor 48, and the speed of the vehicle.

To provide a signal corresponding to the current flowing through the second power devices 150, the second ECU 144 includes at least one second current sensor 158 electrically connected to the second power devices 150. In the illustrated embodiment, two second current sensors are included to detect the current flowing through the second power devices 150. The second current sensor(s) 158 are in operative communication with the second microprocessor 156. More specifically, the second current sensor(s) 158 are electrically connected to the second microprocessor 156.

To provide a signal related to the torque applied at the steering column of the steering system 100, a second torque sensor 160 is included. In the exemplary embodiment of the linkage arrangement 14 of FIG. 1, the second torque sensor 160 is located proximate the first linkage arm 32 and, more specifically, proximate the first pivot joint 34 of the first linkage arm 32. A signal related to the position of the electric motor 48 is provided by a second motor sensor 162 in operative communication with the electric motor 48. The second motor sensor 162 is configured to detect the position of the rotor in the electric motor 48 which is common to both windings 122, 132.

The second ECU 144 also includes a second voltage regulator 164 that is in operative communication with the battery 118 and is configured to regulate and selectively route electric power to the redundant sub-system, specifically including the second driver 154, the second microprocessor 156 and the second current sensor(s) 158, among other potential components.

In addition to two completely distinct ECUs, the components of each sub-system could be physically located on one printed circuit board (PCB) with separated copper layers.

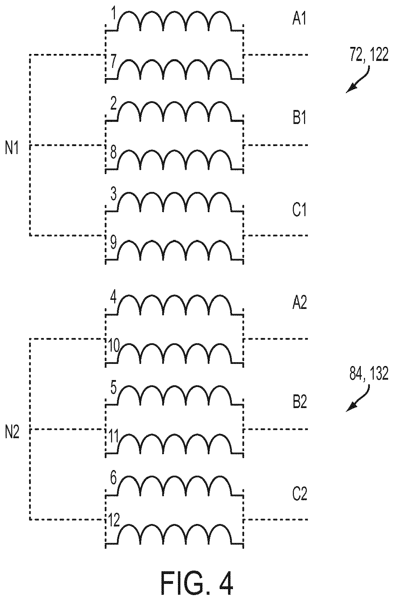

In all of the embodiments described above, the electric motor 48 contains a rotor shaft with magnets and a stator wound with coils for two independent sets of a three-phase motor. In one embodiment, the electric motor 48 comprises a 12-slot, eight-pole configuration, with the 12 poles schematically illustrated in FIG. 4. The physical copper windings are illustrated and schematically represent the first winding 72, 122 and the second winding 84, 132 of the embodiments described above in relation to the overall control system 60, 110. The 12-slot configuration allows the windings 122, 132 to be separated in such a way that the current flowing through the phases does not produce magnetic coupling fields on the other phases, or at least minimizes such fields.

Advantageously, the above-described embodiments provide steering assist torque to each independent winding in the electric motor 48 from their respective sub-systems (i.e., primary and redundant sub-systems). Each ECU 114, 144 is configured to diagnose its own sub-system faults and react accordingly. In the event an ECU fails to operate, the other ECU and its components will remain operational in a normal manner to provide steering assist for the driver to safely operate the vehicle. The redundant ECUs and dual wound motor provide reliability such that no single controller or sensor fault causes a complete loss of steering assist.

As described above, the sub-systems of the above-described embodiments include separate and isolated components that reduce or eliminate the possibility of one adversely impacting the other. In one embodiment, each sub-system provides about 50% of the power steering assist at normal operation. In other embodiments, one of the sub-systems provides the majority of the power steering assist. Based on this, the terms primary and secondary (or redundant) may represent which provides more power, but it is to be understood that the sub-systems can operate simultaneously and continue to do so if the other sub-system fails. This is distinct from a system that includes a "back-up" system that only begins to operate in the event of failure of another sub-system.

By providing a sub-system with duplication of some or all components of another sub-system, the EPS control system described herein facilitates a simple transition during a failure mode that allows a vehicle operator to maneuver the vehicle to safety with little noticeable impact to the driver. In addition, the dual wound motor system of the invention provides significant advantages when used in high load EPS applications, such as light or heavy duty trucks. A dual wound motor system is significantly less expensive than a single wound system capable of handling the same static and dynamic steering loads. It has the added advantage of providing the redundant or "back-up" system capability when one or the other system fails to operate. The Integration of the above-described embodiments with a dual wound motor is unique to an EPS system Both systems provide simultaneous steering assist which has particular utility in both cost effectiveness and redundancy for a high load system.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the scope of the invention as defined in the claims.

## Claims

1. A vehicle steering system (10), comprising an electric power steering, EPS, control system (60) and an EPS linkage arrangement (14),
wherein the EPS control system (60) comprises:
a motor (48) operatively coupled to the EPS linkage arrangement (14), the motor (48) comprising a first winding (72) and a second winding (84);
a power source (68) for the motor (48); and
a controller (62) in operative communication with the motor (48) and the power source (68), the controller (62) comprising:
a microprocessor (76) configured to receive input from a torque sensor (80) and a motor sensor (82);
a first field-effect transistor, FET, driver (74) in operative communication with the microprocessor (76) and a first plurality of FETs (70) operatively connected to the first winding (72) of the motor (48), wherein the first FET driver (74) is electrically connected to the first plurality of FETs (70) and adapted to regulate the electric power provided to the first plurality of FETs (70); and
a second FET driver (88) in operative communication with the microprocessor (76) and a second plurality of FETs (86) operatively connected to the second winding (84) of the motor (48), wherein the second FET driver (88) is electrically connected to the second plurality of FETs (86) and adapted to regulate the electric power provided to the second plurality of FETs (86),
**characterized in that**
the EPS linkage arrangement (14) comprises:
a first linkage arm (32) pivotally coupled to the cross-link member (18) extending in a generally transverse direction;
a second linkage arm (36) pivotally coupled to the cross-link member (18);
a first shaft (16) operatively configured to rotate the first linkage arm (32); and
a linkage member (44) extending from the motor (48) and directly coupled to the cross-link member (18),
wherein the motor (48) is configured to translate the linkage member (44) in a substantially linear manner in the extending direction of the linkage member (44).

2. The vehicle steering system of claim 1, wherein the EPS control system (60) further comprises:
at least one current sensor (78) configured to detect a first winding current and communicate the detected current to the microprocessor (76); and
at least one current sensor (90) configured to detect a second winding current and communicate the detected current to the microprocessor (76).

3. The vehicle steering system of claim 1, wherein the first FET driver (74) and the first plurality of FETs (70) comprise a primary sub-system, and wherein the second FET driver (88) and the second plurality of FETs (86) comprise a secondary sub-system configured to simultaneously provide steering assist with the primary sub-system.

4. The vehicle steering system of claim 3, wherein the EPS control system (60) further comprises a voltage regulator (92) in operative communication with the power source (68) and configured to detect and route a voltage to power a plurality of components of the primary sub-system and the secondary sub-system.

5. The vehicle steering system of claim 1, wherein the motor sensor (82) is adapted to detect a position of a rotor for control of the first winding (72) of the motor (48) and a position of a rotor for control of the second winding (84) of the motor (48).

6. The vehicle steering system of claim 1, wherein the torque sensor (80) is adapted to detect a torque in a steering column operatively coupled to the motor (48).

7. The vehicle steering system of claim 1, wherein the first plurality of FETs (70) and the second plurality of FETs (86) each comprise a plurality of MOSFETs.

8. A vehicle steering system (100), comprising an electric power steering, EPS, control system (110) and an EPS linkage arrangement (14),
wherein the EPS control system (110) comprises:
a motor (48) operatively coupled to the EPS linkage arrangement (14), the motor (48) comprising a first winding (122) and a second winding (132);
a power source (118) configured to power the first winding (122) and the second winding (132) of the motor (48);
a first electronic control unit, ECU, (114) in operative communication with the power source (118) and the first winding (122) of the motor (48), the first ECU (114) comprising:
a first microprocessor (126) configured to receive input from a first torque sensor (130) and a first motor sensor (131); and
a first field-effect transistor, FET, driver (124) in operative communication with the first microprocessor (126) and a first plurality of FETs (120) operatively connected to the first winding (122) of the motor (48), wherein the first FET driver (124) is electrically connected to the first plurality of FETs (120) and adapted to regulate the electric power provided to the first plurality of FETs (120);
a second ECU (144) in operative communication with the power source (118) and the second winding (132) of the motor (48), the second ECU (144) comprising:
a second microprocessor (156) configured to receive input from a second torque sensor (160) and a second motor sensor (162); and
a second field-effect transistor, FET, driver (154) in operative communication with the second microprocessor (156) and a second plurality of FETs (150) operatively connected to the second winding (132) of the motor (48), wherein the second FET driver (154) is electrically connected to the second plurality of FETs (150) and adapted to regulate the electric power provided to the second plurality of FETs (150), **characterised in that** the EPS linkage arrangement (14) comprises:
a first linkage arm (32) pivotally coupled to the cross-link member (18) extending in a generally transverse direction;
a second linkage arm (36) pivotally coupled to the cross-link member (18);
a first shaft (16) operatively configured to rotate the first linkage arm (32); and
a linkage member (44) extending from the motor (48) and directly coupled to the cross-link member (18),
wherein the motor (48) is configured to translate the linkage member (44) in a substantially linear manner in the extending direction of the linkage member (44).

9. The vehicle steering system of claim 8, wherein the EPS control system (100) further comprises:
at least one current sensor (128) configured to detect a first winding current and communicate the detected current to the first microprocessor (126); and
at least one current sensor (158) configured to detect a second winding current and communicate the detected current to the second microprocessor (156).

10. The vehicle steering system of claim 8, wherein the EPS control system (100) further comprises:
a first voltage regulator (134) in operative communication with the power source (118) and configured to detect and route a voltage to power a plurality of components of the first ECU (114); and
a second voltage regulator (164) in operative communication with the power source (118) and configured to detect and route a voltage to power a plurality of components of the second ECU (144).

11. The vehicle steering system of claim 10, wherein the first winding (122) and the first ECU (114) comprise a primary sub-system, and wherein the second winding (132) and the second ECU (144) comprise a secondary sub-system configured to simultaneously provide steering assist with the primary sub-system.

12. The vehicle steering system of claim 8, wherein the first motor sensor (131) is adapted to detect a position of a rotor for control of the first winding (122) of the motor (48) and communicates the position of the first winding (122) to the first ECU (114), and wherein the second motor sensor (162) is adapted to detect a position of a rotor for control of the second winding (132) of the motor (48) and communicates the position of the second winding (132) to the second ECU (144).

13. The vehicle steering system of claim 8, wherein the first torque sensor (130) is adapted to detect a torque in a steering column operatively coupled to the motor (48) and communicates the detected torque to the first ECU (114), and wherein the second torque sensor (160) is adapted to detect a torque in the steering column and communicates the detected torque to the second ECU (144).

## Patentansprüche

1. Fahrzeuglenkungssystem (10), das eine elektrische Servolenkung EPS, ein Steuerungssystem (60) und eine EPS-Koppelgliedanordnung (14) umfasst,
wobei das EPS-Steuerungssystem (60) umfasst:
einen Motor (48), der mit der EPS-Koppelgliedanordnung (14) wirksam gekoppelt ist, wobei der Motor (48) eine erste Wicklung (72) und eine zweite Wicklung (84) umfasst;
eine Leistungsquelle (68) für den Motor (48); und
einen Controller (62) in wirksamer Kommunikation mit dem Motor (48) und mit der Leistungsquelle (68), wobei der Controller (62) umfasst:
einen Mikroprozessor (76), der ausgestaltet ist, um eine Eingabe von einem Drehmomentsensor (80) und von einem Motorsensor (82) zu empfangen;
einen ersten Treiber (74) für Feldeffekttransistoren FET in wirksamer Kommunikation mit dem Mikroprozessor (76) und einer ersten Vielzahl von FETs (70), die mit der ersten Wicklung (72) des Motors (48) wirksam verbunden sind, wobei der erste FET-Treiber (74) mit der ersten Vielzahl von FETs (70) elektrisch verbunden ist und angepasst ist, um die elektrische Leistung zu regeln, die für die erste Vielzahl von FETs (70) bereitgestellt wird; und
einen zweiten FET-Treiber (88) in wirksamer Kommunikation mit dem Mikroprozessor (76) und mit einer zweiten Vielzahl von FETs (86), die mit der zweiten Wicklung (84) des Motors (48) wirksam verbunden sind, wobei der zweite FET-Treiber (88) mit der zweiten Vielzahl von FETs (86) elektrisch verbunden ist und angepasst ist, um die elektrische Leistung zu regeln, die für die zweite Vielzahl von FETs (86) bereitgestellt wird, **dadurch gekennzeichnet, dass**
die EPS-Koppelgliedanordnung (14) umfasst:
einen ersten Koppelgliedarm (32), der mit dem Querverbindungselement (18), welches sich allgemein in eine Querrichtung erstreckt, verschwenkbar gekoppelt ist,
einen zweiten Koppelgliedarm (36), der mit dem Querverbindungselement (18) verschwenkbar gekoppelt ist;
eine erste Welle (16), die wirksam ausgestaltet ist, um den ersten Koppelgliedarm (32) zu drehen; und
ein Koppelgliedelement (44), das sich von dem Motor (48) aus erstreckt und mit dem Querverbindungselement (18) direkt gekoppelt ist,
wobei der Motor (48) ausgestaltet ist, um das Koppelgliedelement (44) auf eine im Wesentlichen lineare Weise in die Erstreckungsrichtung des Koppelgliedelements (44) zu verschieben.

2. Fahrzeuglenkungssystem nach Anspruch 1, wobei das EPS-Steuerungssystem (60) ferner umfasst:
mindestens einen Stromsensor (78), der ausgestaltet ist, um einen ersten Wicklungsstrom zu detektieren und um den detektierten Strom an den Mikroprozessor (76) zu übermitteln; und
mindestens einen Stromsensor (90), der ausgestaltet ist, um einen zweiten Wicklungsstrom zu detektieren und um den detektierten Strom an den Mikroprozessor (76) zu übermitteln.

3. Fahrzeuglenkungssystem nach Anspruch 1,
wobei der erste FET-Treiber (74) und die erste Vielzahl von FETs (70) ein primäres Teilsystem umfassen, und wobei der zweite FET-Treiber (88) und die zweite Vielzahl von FETs (86) ein sekundäres Teilsystem umfassen, das ausgestaltet ist, um zusammen mit dem primären Teilsystem gleichzeitig eine Lenkungsunterstützung bereitzustellen.

4. Fahrzeuglenkungssystem nach Anspruch 3,
wobei das EPS-Steuerungssystem (60) ferner einen Spannungsregler (92) in wirksamer Kommunikation mit der Leistungsquelle (68) umfasst, der ausgestaltet ist, um eine Spannung zu detektieren und weiterzuleiten, um eine Vielzahl von Komponenten des primären Teilsystems und des sekundären Teilsystems mit Leistung zu versorgen.

5. Fahrzeuglenkungssystem nach Anspruch 1,
wobei der Motorsensor (82) angepasst ist, um eine Position eines Rotors zur Steuerung der ersten Wicklung (72) des Motors (48) und eine Position eines Rotors zur Steuerung der zweiten Wicklung (84) des Motors (48) zu detektieren.

6. Fahrzeuglenkungssystem nach Anspruch 1,
wobei der Drehmomentsensor (80) angepasst ist, um ein Drehmoment in einer Lenksäule zu detektieren, die mit dem Motor (48) wirksam gekoppelt ist.

7. Fahrzeuglenkungssystem nach Anspruch 1,
wobei die erste Vielzahl von FETs (70) und die zweite Vielzahl von FETs (86) jeweils eine Vielzahl von MOSFETs umfassen.

8. Fahrzeuglenkungssystem (100), das eine elektrische Servolenkung EPS, ein Steuerungssystem (110) und eine EPS-Koppelgliedanordnung (14) umfasst,
wobei das EPS-Steuerungssystem (110) umfasst:
einen Motor (48), der mit der EPS-Koppelgliedanordnung (14) wirksam gekoppelt ist, wobei der Motor (48) eine erste Wicklung (122) und eine zweite Wicklung (132) umfasst;
eine Leistungsquelle (118), die ausgestaltet ist, um die erste Wicklung (122) und die zweite Wicklung (132) des Motors (48) mit Leistung zu versorgen;
eine erste elektronische Steuerungseinheit ECU (114) in wirksamer Kommunikation mit der Leistungsquelle (118) und mit der ersten Wicklung (122) des Motors (48), wobei die erste ECU (114) umfasst:
einen ersten Mikroprozessor (126), der ausgestaltet ist, um eine Eingabe von einem ersten Drehmomentsensor (130) und von einem ersten Motorsensor (131) zu empfangen; und
einen ersten Treiber (124) für Feldeffekttransistoren FET in wirksamer Kommunikation mit dem ersten Mikroprozessor (126) und mit einer ersten Vielzahl von FETs (120), die mit der ersten Wicklung (122) des Motors (48) wirksam verbunden sind, wobei der erste FET-Treiber (124) mit der ersten Vielzahl von FETs (120) elektrisch verbunden ist und angepasst ist, um die elektrische Leistung zu regeln, die für die erste Vielzahl von FETs (120) bereitgestellt wird;
eine zweite ECU (144) in wirksamer Kommunikation mit der Leistungsquelle (118) und mit der zweiten Wicklung (132) des Motors (48), wobei die zweite ECU (144) umfasst:
einen zweiten Mikroprozessor (156), der ausgestaltet ist, um eine Eingabe von einem zweiten Drehmomentsensor (160) und von einem zweiten Motorsensor (162) zu empfangen; und
einen zweiten Treiber (154) für Feldeffekttransistoren FET in wirksamer Kommunikation mit dem zweiten Mikroprozessor (156) und mit einer zweiten Vielzahl von FETs (150), die mit der zweiten Wicklung (132) des Motors (48) wirksam verbunden sind, wobei der zweite FET-Treiber (154) mit der zweiten Vielzahl von FETs (150) elektrisch verbunden ist und angepasst ist, um die elektrische Leistung zu regeln, die für die zweite Vielzahl von FETs (150) bereitgestellt wird,
**dadurch gekennzeichnet, dass**
die EPS-Koppelgliedanordnung (14) umfasst:
einen ersten Koppelgliedarm (32), der mit dem Querverbindungselement (18), welches sich allgemein in eine Querrichtung erstreckt, verschwenkbar gekoppelt ist;
einen zweiten Koppelgliedarm (36), der mit dem Querverbindungselement (18) verschwenkbar gekoppelt ist;
eine erste Welle (16), die wirksam ausgestaltet ist, um den ersten Koppelgliedarm (32) zu drehen; und
ein Koppelgliedelement (44), das sich von dem Motor (48) aus erstreckt und mit dem Querverbindungselement (18) direkt gekoppelt ist,
wobei der Motor (48) ausgestaltet ist, um das Koppelgliedelement (44) auf eine im Wesentlichen lineare Weise in die Erstreckungsrichtung des Koppelgliedelements (44) zu verschieben.

9. Fahrzeuglenkungssystem nach Anspruch 8, wobei das EPS-Steuerungssystem (100) ferner umfasst:
mindestens einen Stromsensor (128), der ausgestaltet ist, um einen ersten Wicklungsstrom zu detektieren und um den detektierten Strom an den ersten Mikroprozessor (126) zu übermitteln; und
mindestens einen Stromsensor (158), der ausgestaltet ist, um einen zweiten Wicklungsstrom zu detektieren und um den detektierten Strom an den zweiten Mikroprozessor (156) zu übermitteln.

10. Fahrzeuglenkungssystem nach Anspruch 8, wobei das EPS-Steuerungssystem (100) ferner umfasst:
einen ersten Spannungsregler (134), der mit der Leistungsquelle (118) in wirksamer Kommunikation steht und ausgestaltet ist, um eine Spannung zu detektieren und weiterzuleiten, um eine Vielzahl von Komponenten der ersten ECU (114) mit Leistung zu versorgen; und
einen zweiten Spannungsregler (164), der mit der Leistungsquelle (118) in wirksamer Kommunikation steht und ausgestaltet ist, um eine Spannung zu detektieren und weiterzuleiten, um eine Vielzahl von Komponenten der zweiten ECU (144) mit Leistung zu versorgen.

11. Fahrzeuglenkungssystem nach Anspruch 10,
wobei die erste Wicklung (122) und die erste ECU (114) ein primäres Teilsystem umfassen, und wobei die zweite Wicklung (132) und die zweite ECU (144) ein sekundäres Teilsystem umfassen, das ausgestaltet ist, um zusammen mit dem primären Teilsystem gleichzeitig eine Lenkungsunterstützung bereitzustellen.

12. Fahrzeuglenkungssystem nach Anspruch 8,
wobei der erste Motorsensor (131) angepasst ist, um eine Position eines Rotors zur Steuerung der ersten Wicklung (122) des Motors (48) zu detektieren, und die Position der ersten Wicklung (122) an die erste ECU (114) übermittelt, und wobei der zweite Motorsensor (162) angepasst ist, um eine Position eines Rotors zur Steuerung der zweiten Wicklung (132) des Motors (48) zu detektieren, und die Position der zweiten Wicklung (132) an die zweite ECU (144) übermittelt.

13. Fahrzeuglenkungssystem nach Anspruch 8,
wobei der erste Drehmomentsensor (130) angepasst ist, um ein Drehmoment in einer Lenksäule zu detektieren, die mit dem Motor (48) wirksam gekoppelt ist, und das detektierte Drehmoment an die erste ECU (114) übermittelt, und wobei der zweite Drehmomentsensor (160) angepasst ist, um ein Drehmoment in der Lenksäule zu detektieren, und das detektierte Drehmoment an die zweite ECU (144) übermittelt.

## Revendications

1. Système de direction pour véhicule (10) comprenant un système de commande de direction assistée électrique dit EPS ("electric power steering") (60) et un agencement formant mécanisme EPS (14),
dans lequel le système de commande EPS (60) comprend :
un moteur (48) fonctionnellement couplé à l'agencement formant mécanisme EPS (14), le moteur (48) comprenant un premier enroulement (72) et un second enroulement (84) ;
une source de puissance (68) pour le moteur (48) ; et
un contrôleur (62) en communication fonctionnelle avec le moteur (48) et avec la source de puissance (68), le contrôleur (62) comprenant :
un microprocesseur (76) configuré pour recevoir des entrées provenant d'un capteur de couple (80) et d'un capteur de moteur (82) ;
un premier pilote (74) à transistor à effet de champ dit "FET", en communication fonctionnelle avec le microprocesseur (76) et une pluralité de FETs (70) fonctionnellement connectés au premier enroulement (72) du moteur (48), dans lequel le premier pilote FET (74) est connecté électriquement à la première pluralité de FETs (70) et adapté à réguler la puissance électrique fournie à la première pluralité de FETs (70) ; et
un second pilote FET (88) en communication fonctionnelle avec le microprocesseur (76) et une seconde pluralité de FETs (86) fonctionnellement connectés au second enroulement (84) du moteur (48), dans lequel le second pilote FET (88) est connecté électriquement à la seconde pluralité de FETs (86) et adapté à réguler la puissance électrique fournie à la seconde pluralité de FETs (86),
**caractérisé en ce que**
l'agencement formant mécanisme EPS (14) comprend :
un premier bras de mécanisme (32) couplé en pivotement à l'élément de liaison transversal (18) s'étendant dans une direction généralement transversale ;
un second bras de mécanisme (36) couplé en pivotement à l'élément de liaison transversal (18) ;
un premier axe (16) fonctionnellement configuré pour mettre en rotation le premier bras de mécanisme (32) ; et
un élément de liaison (44) s'étendant depuis le moteur (48) et couplé directement à l'élément de liaison transversal (18),
dans lequel le moteur (48) est configuré pour mettre en translation l'élément de liaison (44) d'une manière sensiblement linéaire dans la direction d'extension de l'élément de liaison (44).

2. Système de direction pour véhicule selon la revendication 1, dans lequel le système de commande EPS (60) comprend en outre :
au moins un capteur de courant (78) configuré pour détecter un courant de premier enroulement et pour communiquer le courant détecté au microprocesseur (76) ; et
au moins un capteur de courant (90) configuré pour détecter un courant de second enroulement et pour communiquer le courant détecté au microprocesseur (76).

3. Système de direction pour véhicule selon la revendication 1, dans lequel le premier pilote FET (74) et la première pluralité de FETs (70) comprennent un sous-système primaire, et dans lequel le second pilote FET (88) et la seconde pluralité de FETs (86) comprennent un sous-système secondaire configuré pour fournir simultanément une assistance à la direction avec le sous-système primaire.

4. Système de direction pour véhicule selon la revendication 3, dans lequel le système de commande EPS (60) comprend en outre un régulateur de tension (92) en communication fonctionnelle avec la source de puissance (68) et configuré pour détecter et pour véhiculer une tension afin d'alimenter une pluralité de composants du sous-système primaire et du sous-système secondaire.

5. Système de direction pour véhicule selon la revendication 1, dans lequel le capteur moteur (82) est adapté à détecter une position d'un rotor pour commander le premier enroulement (72) du moteur (48) et une position d'un rotor pour commander le second enroulement (84) du moteur (48).

6. Système de direction pour véhicule selon la revendication 1, dans lequel le capteur de couple (80) est adapté à détecter un couple dans une colonne de direction fonctionnellement couplée au moteur (48).

7. Système de direction pour véhicule selon la revendication 1, dans lequel la première pluralité de FETs (70) et la seconde pluralité de FETs (86) comprennent chacune une pluralité de MOSFETs.

8. Système de direction pour véhicule (100), comprenant un système de commande de direction assistée électrique dit "EPS" (ou electric power steering) (110) et un agencement formant mécanisme EPS (14),
dans lequel le système de commande EPS (110) comprend :
un moteur (48) fonctionnellement couplé à l'agencement formant mécanisme EPS (14), le moteur (48) comprenant un premier enroulement (122) et un second enroulement (132) ;
une source de puissance (118) configurée pour alimenter une puissance au premier enroulement (122) et au second enroulement (132) du moteur (48);
une première unité de commande électronique dite ECU (114) en communication fonctionnelle avec la source de puissance (118) et avec le premier enroulement (122) du moteur (48), la première ECU (114) comprenant :
un premier microprocesseur (126) configuré pour recevoir une entrée depuis un premier capteur de couple (130) et un premier capteur de moteur (131) ; et
un premier pilote à transistor à effet de champ FET (124) en communication fonctionnelle avec le premier microprocesseur (126) et une première pluralité de FETs (120) fonctionnellement connectés au premier enroulement (122) du moteur (48), dans lequel le premier pilote FET (124) est électriquement connecté à la première pluralité de FETs (120) et adapté à réguler la puissance électrique fournie par la première pluralité de FETs (120) ;
une seconde unité de commande électronique ECU (144), en communication fonctionnelle avec la source de puissance (118) et avec le second enroulement (132) du moteur (48), la seconde ECU (144) comprenant :
un second microprocesseur (156) configuré pour recevoir une entrée depuis second capteur de couple (160) et un second capteur de moteur (162) ; et
un second pilote à transistor à effet de champ FET (154) en communication fonctionnelle avec le second microprocesseur (156) et une seconde pluralité de FETs (150) fonctionnellement connectés au second enroulement (132) du moteur (48), dans lequel le second pilote à FET (154) est électriquement connecté à la seconde pluralité de FETs (150) et adapté à réguler la puissance électrique fournie à la seconde pluralité de FETs (150),
**caractérisé en ce que** l'agencement formant mécanisme EPS (14) comprend :
un premier bras de liaison (34) couplé en pivotement à l'élément de liaison transversal (18) s'étendant dans une direction généralement transversale ;
un second bras de liaison (36) couplé en pivotement à l'élément de liaison transversal (18) ;
un premier arbre (16) fonctionnellement configuré pour mettre en rotation le premier bras de liaison (32) ; et
un élément de liaison (44) qui s'étend depuis le moteur (48) et qui est directement couplé à l'élément de liaison transversal (18),
dans lequel le moteur (48) est configuré pour mettre en translation l'élément de liaison (44) d'une manière sensiblement linéaire dans la direction d'extension de l'élément de liaison (44).

9. Système de direction pour véhicule selon la revendication 8, dans lequel le système de commande EPS (100) comprend en outre :
au moins un capteur de courant (128) configuré pour détecter un courant de premier enroulement et pour communiquer le courant détecté au premier microprocesseur (126) ; et
au moins un capteur de courant (158) configuré pour détecter un courant de second enroulement et pour communiquer le courant détecté au second microprocesseur (156).

10. Système de direction pour véhicule selon la revendication 8, dans lequel le système de commande EPS (100) comprend en outre :
un premier régulateur de tension (134) en communication fonctionnelle avec la source de puissance (118) et configuré pour détecter et pour véhiculer une tension pour alimenter en puissance une pluralité de composants de la première ECU (114) ; et
un second régulateur de tension (164) en communication fonctionnelle avec la source de puissance (118) et configuré pour détecter et pour véhiculer une tension pour alimenter en puissance une pluralité de composants de la seconde ECU (144).

11. Système de direction pour véhicule selon la revendication 10, dans lequel le premier enroulement (122) et la première ECU (114) comprennent un sous-système primaire, et dans lequel le second enroulement (132) et la seconde ECU (144) comprennent un sous-système secondaire configuré pour fournir simultanément une assistance à la direction avec le sous-système primaire.

12. Système de direction pour véhicule selon la revendication 8, dans lequel le premier capteur de moteur (131) est adapté à détecter une position d'un rotor pour commander le premier enroulement (122) du moteur (48) et à communiquer la position du premier enroulement (122) à la première ECU (114), et dans lequel le second capteur de moteur (162) est adapté à détecter une position d'un rotor pour commander le second enroulement (132) du moteur (48), et il communique la position du second enroulement (132) à la seconde ECU (144).

13. Système de direction pour véhicule selon la revendication 8, dans lequel le premier capteur de couple (130) est adapté à détecter un couple dans une colonne de direction fonctionnellement couplée au moteur (48) et communique le couple détecté à la première ECU (114), et dans lequel le second couple moteur (160) est adapté à détecter un couple dans la colonne de direction et il communique le couple détecté à la seconde ECU (144).
